# EUROPEAN PATENT APPLICATION

(11) **EP 3 981 568 A1**
(43) Date of publication of application: **13.04.2022**
(21) Application number: 20201420.5
(22) Date of filing: 12.10.2020
(51) Int. Cl.: B29C 33/52, B29C 39/10, B29C 69/02, B29C 70/84, B29C 70/44, B29D 99/00, B29C 33/38, B29C 39/42

(54) **SUPPORT STRUCTURE AND MANUFACTURING METHOD FOR JOINING PREFABRICATED PARTS**

(71) Applicant: Universität der Bundeswehr München, 85579 Neubiberg (DE)
(72) Inventor: Montero, Joaquin, 85435 Erding (DE); Vitale, J. Pablo, 80997 München (DE)
(74) Representative: Koplin, Moritz

## Description

### Field

The present disclosure relates to a support structure and a manufacturing method for joining prefabricated parts. In particular, the present disclosure relates to joining prefabricated parts by molding, wherein the prefabricated parts are held in place by an additively manufactured support structure.

### Background

Using a support structure for holding prefabricated parts (that are to be joined) in place allows for manufacturing complex geometries at high precision.

### Summary

The present disclosure is directed at a manufacturing method and a sacrificial support structure which may be used in the manufacturing method.

The manufacturing method comprises providing a support structure which has a plurality of elongate cavities, wherein each of said elongate cavities extends from a first opening in an outer surface of the support structure to a second opening in the outer surface of the support structure. The method further comprises interconnecting elongate members that are inserted into said elongate cavities by causing or allowing a material which is in contact with said elongate members to solidify.

The term "manufacturing method", as used throughout the description and the claims, particularly refers to a method of joining prefabricated parts by molding. In this regard, the term "support structure", as used throughout the description and the claims, particularly refers to an additively manufactured structure which holds the prefabricated parts (inside the mold) in place during molding. For example, an elongate cavity may have portions that are only slightly larger than (a dimension of) a prefabricated part to ensure that the prefabricated part remains in a specific position and orientation relative to the other prefabricated parts during molding.

The support structure may be an expendable (or lost) support structure. I.e., the support structure may be destructed when removing the support structure from the joined prefabricated parts and the support structure may be designed in a way that the destruction is not likely to damage the manufactured article. For example, the support structure may be soluble in a solvent (e.g., water) to which the manufactured article is resistant. For instance, the support structure may be made from polyvinyl alcohol, PVA.

Moreover, the term "molding", as used throughout the description and the claims, particularly refers to filling a mold with a liquid and causing (or having provided for) conditions under which the liquid begins to solidify. For example, a liquid resin may be infused (under vacuum) into the mold and start to solidify due to polymerization. In another example, a liquid alloy may be injected (under pressure) into the mold and start to solidify when the temperature of the alloy decreases below a crystallization temperature.

Once solidification has sufficiently progressed, the article formed by the prefabricated parts joined by the hardening/hardened liquid may be removed from the mold. In this regard, the term "mold", as used throughout the description, particularly refers to parts (e.g., a bottom part and a top part) which when put together form a mold cavity, the shape of which (corresponds to or) defines (at least partially) the outer shape of the manufactured article. The molded article may be removed from the mold by disassembling the parts and/or withdrawing the manufactured article from a part to which it adheres.

In addition, the formulation "interconnecting elongate members", as used throughout the description and the claims, particularly refers to a scenario in which two (or more) elongate members are connected to each other by the solidifying material which occupies a space between said two (or more) elongate members. Notably, said formulation shall also cover scenarios in which two elongate members are bonded to a prefabricated part which connects said elongate members with each other once the material has solidified.

In this regard, the solidifying material may be provided (only) between two prefabricated parts (that are to be joined) or the prefabricated elongate members (that are to be joined) may be (at least partially) surrounded by the solidifying material. For example, the outer surface of the solidifying material may form a body (e.g., a sphere) and the elongate members (that are to be joined) may extend into or through the body. In this regard, the term "elongate member", as used throughout the description and the claims, particularly refers to a beam (e.g., a rod, a bar, a profile, etc.). In the manufactured article, beam ends may be joined to form a lattice structure. The centers (or other parts between the ends) of the elongate members may also (or in addition) be joined.

The solidified material may connect said elongate members to skin layers of a sandwich structure, wherein the elongate members form a lattice core of the sandwich structure. In another example, the skin layers may be joined with the lattice core in a separate manufacturing step. The lattice core may lend high stability to the (low density) sandwich structure (e.g., a sandwich panel).

The lattice core for a sandwich panel of a particular size may be manufactured in a single step. If limitations on additive manufacturing do not allow for producing the (whole) support structure (of the panel) in a single step, the support structure may comprise multiple parts that have been produced individually which may be placed side by side when providing the support structure.

The skin layers may be parallel and said elongate members may extend diagonally between said parallel skin layers. For example, the elongate members may be beams that are rotated in by 15° to 75° or 30° to 60° (e.g., 45°) relative to the skin layers.

The elongate members may extend through openings in the skin layers. The parts extending from the (otherwise smooth or plain outer) surface of the skin layer may be removed once the material has fully hardened/solidified.

Preferably, two, three, four or more of said elongate members extend through one of said openings in the skin layers. I.e., an opening may designate a position where the elongate members are joined with each other and/or the skin layer.

The solidified material may bond the elongate members to each other. The support structure may have a channel extending from a third opening in the outer surface of the support structure to an intersection of the elongate cavities and the material which, once solidified, bonds said elongate members to each other, may be supplied through said channel.

The channel may extend from the third opening in the outer surface of the support structure to a fourth opening in the outer surface of the support structure. The material may be flown through the channel by causing a pressure difference between the third opening and the fourth opening. The same pressure difference may be caused between the first opening and the second opening. A part of the material solidifying in the channel may be removed after the material has hardened/solidified. For example, the part upstream and/or downstream of the intersection may be removed after the material has hardened/solidified.

There may be a circumferential gap between an inner surface of the support structure at the intersection of the elongate cavities and the elongate members. For example, the solidifying material may form a ring around the elongate members or a sphere through which the elongate members extend. For instance, the solidifying material may form a ring or a sphere around a center of mass of the elongate members that are bonded together by the ring or the sphere.

The method may further comprise removing the support structure. For example, the support structure may be dissolved in a solvent agent (e.g., water).

The elongate members may form a unit cell of a multi-cell lattice.

In this regard, the formulation "unit cell of a multi-cell lattice", as used throughout the description and the claims, particularly refers to a pattern formed by said elongate members which is repeated throughout the lattice.

The elongate members may have a constant cross-section. The elongate members may be truss members. The elongate members may be made from fiber-reinforced polymer (e.g., from carbon fiber-reinforced polymer or glass fiber-reinforced polymer).

The method may further comprise inserting the elongate members into the elongate cavities. This step may be automated and performed by a robot.

The method may further comprise infusing the material into a mold containing the support structure and said elongate support members. The material may be a reactive resin.

The sacrificial support structure comprises a plurality of elongate cavities, wherein each of said elongate cavities extends from a first opening in an outer surface of the support structure to a second opening in the outer surface of the support structure. The sacrificial support structure further comprises a channel extending from a third opening in the outer surface of the support structure to an intersection of said elongate cavities.

The channel may extend from the third opening in the outer surface of the support structure to a fourth opening in the outer surface of the support structure.

The sacrificial support structure may be used in the manufacturing method.

A manufacturing system may comprise a device (e.g., a 3D-printer) which is configured to additively manufacture the sacrificial support structure and a mold which is configured for a vacuum-assisted resin infusion process. The vacuum-assisted resin infusion process may be used to interconnect the prefabricated elongate members in the sacrificial support structure by infusing resin into the mold and causing or allowing the resin to solidify.

### Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified.
Fig. 1 shows an isometric view of a mold;
Fig. 2 shows a cross-sectional view of the mold shown in Fig. 1;
Fig. 3 shows another cross-sectional view of the mold shown in Fig. 1;
Fig. 4 shows a part of the cross-sectional view shown in Fig. 3;
Fig. 5 shows a top view of a support structure;
Fig. 6 shows a cross-sectional view of the support structure shown in Fig. 5;
Fig. 7 shows an isometric view of the support structure shown in Fig. 5;
Fig. 8 shows an exploded view of the mold containing the support structure;
Fig. 9 illustrates the arrangement of the elements shown in Fig. 8, once assembled;
Fig. 10 shows a top view of a support structure with elongate members being inserted into the cavities;
Fig. 11 shows a cross-sectional view of the support structure shown in Fig. 10;
Fig. 12 shows another cross-sectional view of the support structure shown in Fig. 10;
Fig. 13 shows a part of the cross-sectional view shown in Fig. 12;
Fig. 14 shows a side view of an article manufactured with the parts shown in the preceding figures;
Fig. 15 shows an isometric view of the article shown in Fig. 14;
Fig. 16 shows another isometric view of the article shown in Fig. 14;
Fig. 17 shows a flow-chart of the manufacturing process.

Notably, the drawings are not drawn to scale and unless otherwise indicated, they are merely intended to conceptually illustrate the structures and procedures described herein.

### Description of Embodiments

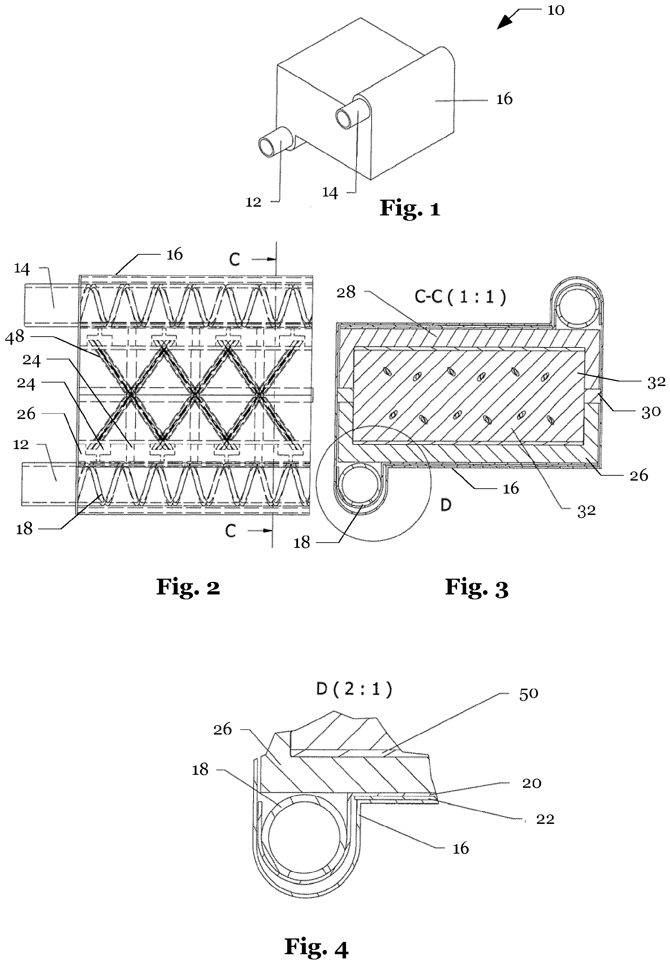

Fig. 1 shows mold 10 having inlet 12 and outlet 14. Inlet 12 may be connected to a resin line for infusing resin into mold 10. Outlet 14 may be connected to a vacuum line to reduce or even avoid gas trapping (e.g., air trapping). Mold 10 comprises vacuum bagging film 16 to prevent gas (e.g., air) from entering mold 10. Vacuum bagging film 16 forms an outer flexible hull of mold 10. As illustrated in Fig. 2 to Fig. 4, resin may be supplied through inlet 12 and flow through spiral hose 18, peel ply 20 and distribution mesh 22 into cut-outs 24 in bottom part 26 which together with top part 28 forms a mold cavity (sealed by sealing elements 30) that contains support structure 32.

Support structure 32 may be additively manufactured and may be soluble in water. Spiral hose 18 may equally distribute resin along a side of distribution mesh 22. Distribution mesh 22 may allow equally distributing resin across a plane. Peel ply 20 may facilitate separating bagging film 16 and distribution mesh 22 by which peel ply 20 is sandwiched. In Fig. 2 and Fig. 3, spiral hose 18 is depicted as extending along (and parallel to) an edge of distribution mesh 22. However, spiral hose 18 may also extend along a center line of mesh 22 or along a line between the center line and the edge of distribution mesh 22.

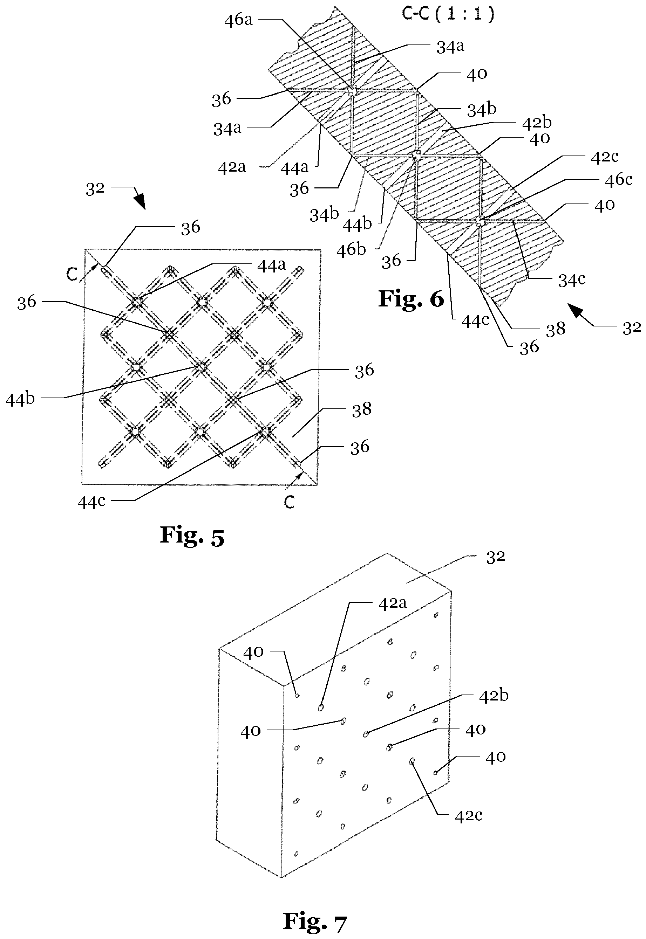

As illustrated in Fig. 5 to Fig. 7, support structure 32 has a plurality of elongate cavities 34a, 34b, and 34c. Elongate cavities 34a, 34b, and 34c extend from first openings 36 in outer surface 38 of support structure 32 to second openings 40 in outer surface 38 of support structure 32. Elongate cavities 34a, 34b, 34c may have a constant cross-section. For example, elongate cavities 34a, 34b, and 34c may be tube-shaped (cylindrical). The (longitudinal) axes of elongate cavities 34a, 34b, and 34c are inclined relative to outer surface 38 by 45°. Moreover, in a projection onto a plane which is parallel to outer surface 38, there is an angle of 45° between the (longitudinal) axes of two of elongate cavities 34a, 34b, and 34c. Two (or more) of elongate cavities 34a, 34b, and 34c merge at each of first openings 36. Likewise, two (or more) of elongate cavities 34a, 34b, and 34c merge at each of second openings 36.

Support structure 32 also has channels 42a, 42b, and 42c. Channels 42a, 42b, and 42c extend from openings 44a, 44b, and 44c in outer surface 38 of support structure 32 to intersections 46a, 46b, and 46c of elongate cavities 34a, 34b, and 34c, respectively, where support structure 32 has spherical cavities. The spherical cavities are larger than what would be required for the formation of elongate cavities 34a, 34b, and 34c having constant cross-sections. Intersections 46a, 46b, and 46c may be on a central plane between outer surface 38 and the surface at the other side of support structure 32. In a projection onto a plane which is parallel to outer surface 38, intersections 46a, 46b, and 46c may form a matrix.

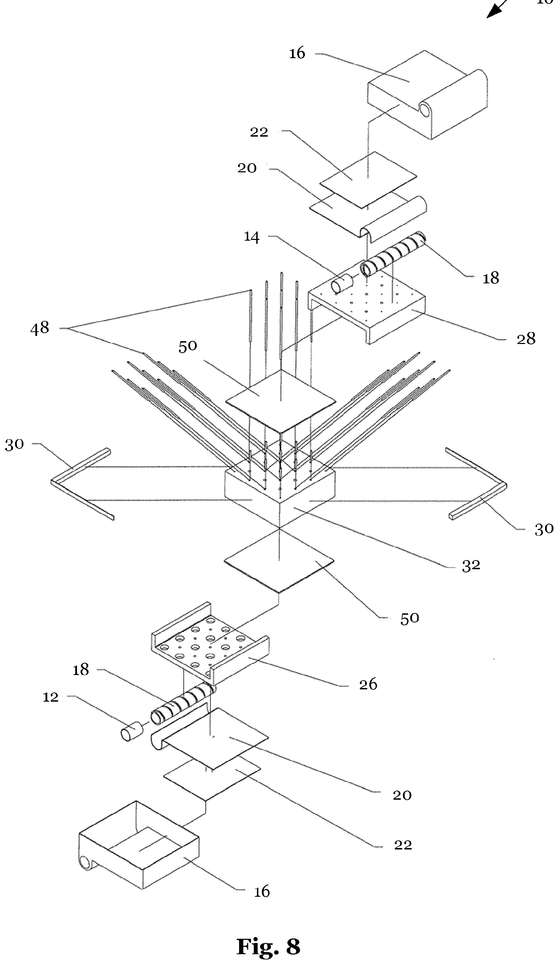

As illustrated in Fig. 8, elongate cavities 34a, 34b, and 34c ensure that elongate members 48 (once inserted into elongate cavities 34a, 34b, and 34c) extend diagonally between skin layers 50. Skin layers 50 may be parallel to outer surface 38. Once solidified, the resin flown through cut-outs 24 into channels 42a, 42b, and 42c bonds elongate members 48 to each other. Once bonded together, elongate members 48 may form a lattice core of elongate members 48. In the lattice core, the ends of each of elongate members 48 maybe bonded to at least another one of elongate members 48 and a portion between the ends of each of the elongate members may be bonded to a portion between the ends of at least another one of elongate members 48.

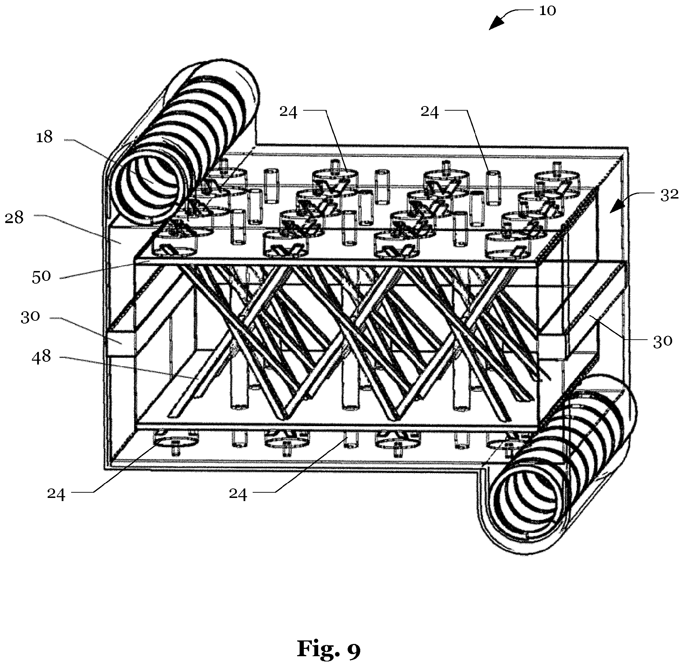

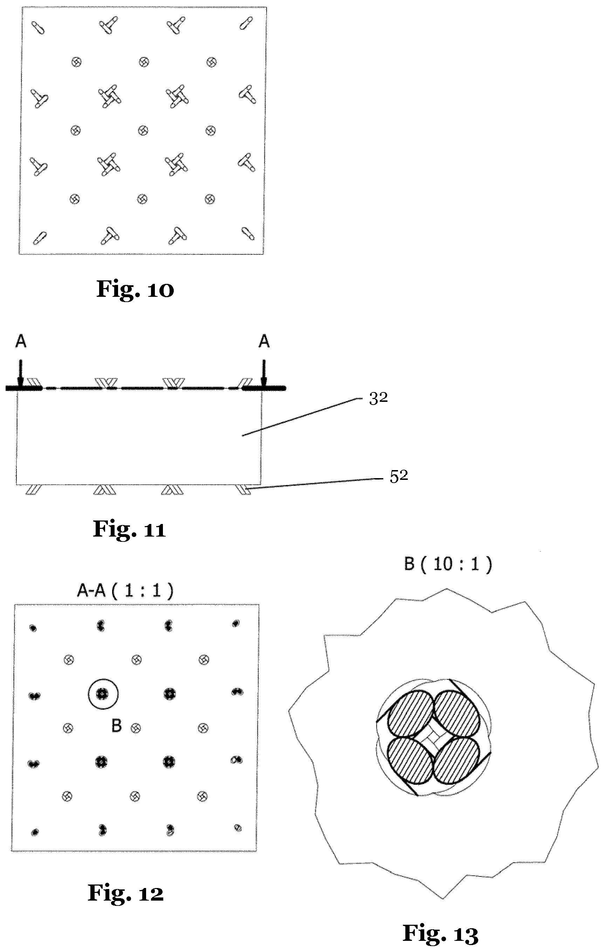

As illustrated in Fig. 9 to Fig. 13, resin flown through cut-outs 24 into openings in skin layers 50 bonds elongate members 48 to each other and also bonds skin layers 50 to elongate members 48. Skin layers 50 may be parallel to each other and bonded to the lattice core at the ends of elongate members 48. Thus, two ends of elongate members 48 are bonded to each other and to one of skin layers 50 by resin flown between the said ends and said skin layer 50. Parts 52 of elongate members 48 that extend from the (otherwise smooth or plain outer) surface of skin layers 50 may be removed once the material has fully hardened.

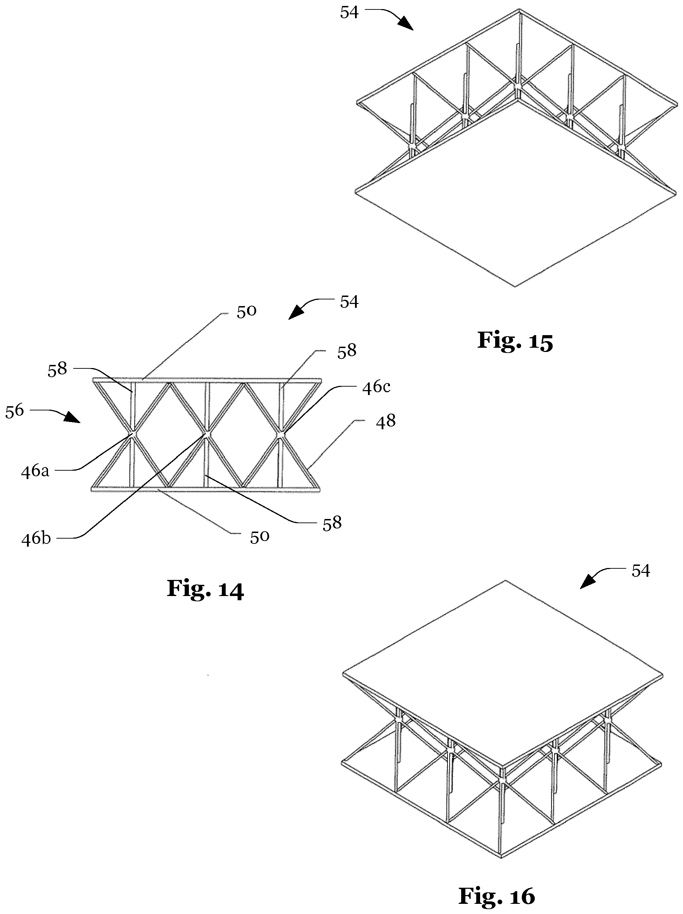

Fig. 14 to Fig. 16 show sandwich structure 54 (after removal of support structure 32) comprising skin layers 50 and lattice core 56 formed by bonded elongate members 48. Sandwich structure 54 comprises resin 58 that has hardened in channels 42a, 42b, and 42c. (Residuals of) resin 58 upstream and downstream of intersections 46a, 46b, and 46c may be removed from sandwich structure 54. Notably, sandwich structure 54 shown in Fig. 14 to Fig 16 is merely an example and sandwich structures 54 with larger dimensions may be manufactured by increasing the length and/or width of support structure 32 and mold 10. Support structure 32 may either be manufactured as a single piece or may be formed by arranging multiple support structures 32 side-by-side.

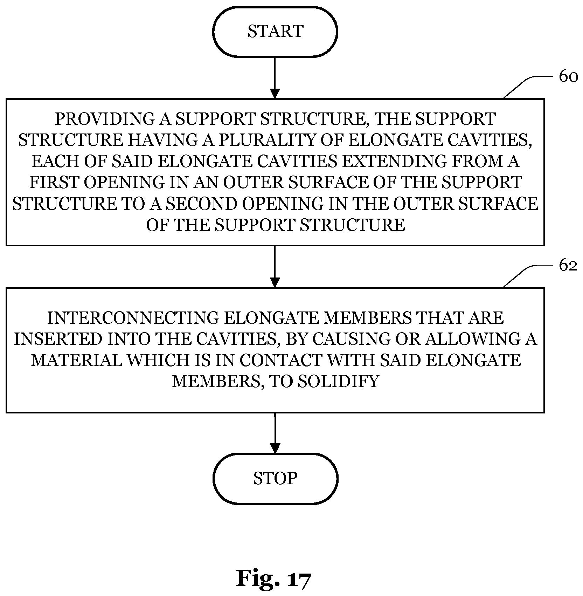

Fig. 17 shows a flow-chart of the manufacturing process. The process starts at 60 with a step of providing the support structure 32 which has a plurality of elongate cavities 34a, 34b, and 34c extending from first openings 36 in outer surface 38 of support structure 32 to second openings 40 in outer surface 38 of support structure 32. The process is continued at 62 with a step of interconnecting elongate members 48 that are inserted into elongate cavities 34a, 34b, and 34c by causing or allowing resin 58 which is in contact with elongate members 48, to solidify.

The process may be continued by removing support structure 32 and removing residual resin from lattice core 56. If lattice core 56 is bonded to skin layers 50 (either in step 62 or in a succeeding step) residual resin and/or residual parts of elongate members 48 may be removed from sandwich structure 54 formed by lattice core 56 and skin layers 50.

### Reference Signs List

- 10: mold
- 12: inlet
- 14: outlet
- 16: vacuum bagging film
- 18: spiral hose
- 20: peel ply
- 22: mesh
- 24: cut-out
- 26: bottom part
- 28: top part
- 30: sealing element
- 32: support structure
- 34a: elongate cavity
- 34b: elongate cavity
- 34c: elongate cavity
- 36: opening
- 38: surface
- 40: opening
- 42a: channel
- 42b: channel
- 42c: channel
- 44a: opening
- 44b: opening
- 44c: opening
- 46a: intersection
- 46b: intersection
- 46c: intersection
- 48: elongate member
- 50: skin layer
- 52: part
- 54: sandwich structure
- 56: lattice core
- 58: resin
- 60: step
- 62: step

## Claims

1. A manufacturing method, comprising:
providing a support structure (32), the support structure (32) having a plurality of elongate cavities (34a, 34b, 34c), each of said elongate cavities (34a, 34b, 34c) extending from a first opening (36) in an outer surface (38) of the support structure (32) to a second opening (40) in the outer surface (38) of the support structure (32); and
interconnecting elongate members (48) that are inserted into said elongate cavities (34a, 34b, 34c), by causing or allowing a material which is in contact with said elongate members (48), to solidify.

2. The manufacturing method of claim 1, wherein the solidified material connects said elongate members (48) to skin layers (50) of a sandwich structure (52), wherein the elongate members (48) form a lattice core of the sandwich structure (52).

3. The manufacturing method of claim 2, wherein the skin layers (50) are parallel and said elongate members (48) extend diagonally between said parallel skin layers (50).

4. The manufacturing method of claim 2 or 3, wherein said elongate members (48) extend through openings in the skin layers (50).

5. The manufacturing method of claim 4, wherein two, three, four or more of said elongate members (48) extend through one of said openings in the skin layers (50).

6. The manufacturing method of any one of claims 1 to 5, wherein the solidified material bonds said elongate members (48) to each other.

7. The manufacturing method of claim 6, wherein the support structure (32) has a channel (42a, 42b, 42c) extending from a third opening (44a, 44b, 44c) in the outer surface (38) of the support structure (32) to an intersection (46a, 46b, 46c) of said elongate cavities (34a, 34b, 34c) and the material which, once solidified, bonds said elongate members (48) to each other, is supplied through said channel (42a, 42b, 42c).

8. The manufacturing method of claim 7, wherein there is a circumferential gap between an inner surface of the support structure (32) at the intersection (46a, 46b, 46c) of said elongate cavities (34a, 34b, 34c) and the elongate members (48).

9. The manufacturing method of any one of claims 1 to 8, further comprising:
removing the support structure (32).

10. The manufacturing method of any one of claims 1 to 9, wherein said elongate members (48) form a unit cell of a multi-cell lattice.

11. The manufacturing method of any one of claims 1 to 10, wherein said elongate members (48) have a constant cross-section.

12. The manufacturing method of any one of claims 1 to 11, wherein said elongate members (48) are made from fiber-reinforced polymer.

13. The manufacturing method of any one of claims 1 to 12, further comprising:
infusing the material into a mold (10) containing the support structure (32) and said elongate support members (48).

14. The manufacturing method of any one of claims 1 to 13, wherein said material is a reactive resin.

15. A sacrificial support structure (32) for insert molding, comprising:
a plurality of elongate cavities (34a, 34b, 34c), wherein each of said elongate cavities (34a, 34b, 34c) extends from a first opening (36) in an outer surface (38) of the support structure (32) to a second opening (40) in the outer surface (38) of the support structure (32); and
a channel (42a, 42b) extending from a third opening (44a, 44b, 44c) in the outer surface (38) of the support structure (32) to an intersection (46a, 46b, 46c) of said elongate cavities (34a, 34b, 34c).

## Amended claims

### Amended claims in accordance with Rule 137(2) EPC.

1. A manufacturing method, comprising:
providing a support structure (32), the support structure (32) having a plurality of elongate cavities (34a, 34b, 34c), each of said elongate cavities (34a, 34b, 34c) extending from a first opening (36) in an outer surface (38) of the support structure (32) to a second opening (40) in the outer surface (38) of the support structure (32); and
interconnecting elongate members (48) that are inserted into said elongate cavities (34a, 34b, 34c), by causing or allowing a material which is in contact with said elongate members (48) to solidify;
wherein the solidified material bonds said elongate members (48) to each other;
**characterized in that**
the support structure (32) has a channel (42a, 42b, 42c) extending from a third opening (44a, 44b, 44c) in the outer surface (38) of the support structure (32) to an intersection (46a, 46b, 46c) of said elongate cavities (34a, 34b, 34c) and the material which, once solidified, bonds said elongate members (48) to each other, is supplied through said channel (42a, 42b, 42c).

2. The manufacturing method of claim 1, wherein the solidified material connects said elongate members (48) to skin layers (50) of a sandwich structure (52), wherein the elongate members (48) form a lattice core of the sandwich structure (52).

3. The manufacturing method of claim 2, wherein the skin layers (50) are parallel and said elongate members (48) extend diagonally between said parallel skin layers (50).

4. The manufacturing method of claim 2 or 3, wherein said elongate members (48) extend through openings in the skin layers (50).

5. The manufacturing method of claim 4, wherein two, three, four or more of said elongate members (48) extend through one of said openings in the skin layers (50).

6. The manufacturing method of claim 1, wherein there is a circumferential gap between an inner surface of the support structure (32) at the intersection (46a, 46b, 46c) of said elongate cavities (34a, 34b, 34c) and the elongate members (48).

7. The manufacturing method of any one of claims 1 to 6, further comprising:
removing the support structure (32).

8. The manufacturing method of any one of claims 1 to 7, wherein said elongate members (48) form a unit cell of a multi-cell lattice.

9. The manufacturing method of any one of claims 1 to 8, wherein said elongate members (48) have a constant cross-section.

10. The manufacturing method of any one of claims 1 to 9, wherein said elongate members (48) are made from fiber-reinforced polymer.

11. The manufacturing method of any one of claims 1 to 10, further comprising:
infusing the material into a mold (10) containing the support structure (32) and said elongate support members (48).

12. The manufacturing method of any one of claims 1 to 11, wherein said material is a reactive resin.

13. The manufacturing method of any one of claims 1 to 12, wherein the channel extends from the third opening in the outer surface of the support structure to a fourth opening in the outer surface of the support structure.

14. The manufacturing method of claim 13, further comprising:
flowing the material through the channel by causing a pressure difference between the third opening and the fourth opening.

15. A sacrificial support structure (32) for insert molding, comprising:
a plurality of elongate cavities (34a, 34b, 34c), wherein each of said elongate cavities (34a, 34b, 34c) extends from a first opening (36) in an outer surface (38) of the support structure (32) to a second opening (40) in the outer surface (38) of the support structure (32);
**characterized by** a channel (42a, 42b) extending from a third opening (44a, 44b, 44c) in the outer surface (38) of the support structure (32) to an intersection (46a, 46b, 46c) of said elongate cavities (34a, 34b, 34c).

16. The sacrificial support structure (32) for insert molding of claim 15, wherein the sacrificial support structure (32) is additively manufactured and/or soluble in a solvent, preferably in water.
